(19) Europäisches Patentamt
European Patent Office
Office européen des brevets

(11) **EP 2 838 051 A2**

(12) **EUROPEAN PATENT APPLICATION**

(43) Date of publication:
**18.02.2015 Bulletin 2015/08**

(51) Int Cl.:
***G06K 9/00*** *(2006.01)*

(21) Application number: **14180659.6**

(22) Date of filing: **12.08.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **12.08.2013 CN 201310349606**

(71) Applicant: **Ricoh Company, Ltd.**
**Tokyo 143-8555 (JP)**

(72) Inventors:
• **Hu, Ping**
**100044 Haidian District (CN)**

• **Lu, Yaojie**
**100044 Haidian District (CN)**
• **Shi, Zhongchao**
**100044 Haidian District (CN)**
• **Liu, Yuan**
**100044 Haidian District (CN)**

(74) Representative: **Maury, Richard Philip**
**Marks & Clerk LLP**
**90 Long Acre**
**London WC2E 9RA (GB)**

(54) **Linear road marking detection method and linear road marking detection apparatus**

(57) A linear road marking detection method includes the steps of obtaining a u-disparity map including a road surface region (S410); determining a road vanishing point on the u-disparity map (S420); obtaining a first resolution probability distribution diagram of a line in a predetermined region in a vicinity of the road vanishing point, from a first resolution represented by a first predetermined polar point interval and a first predetermined polar angle interval (S430); and determining different types of the linear road marking based on a relation between an actual distance between lines parallel to each other in a physical world and a corresponding polar angle in the first resolution probability distribution diagram of the lines parallel to each other (S440).

FIG.2

Description

BACKGROUND OF THE INVENTION

1. Field of the Invention

The disclosures herein generally relate to a linear road marking detection method and a linear road marking detection apparatus.

2. Description of the Related Art

An application of a driving assistance system is becoming more and more popular. The driving assistance system is provided with a function of detecting a road surface, a function of detecting a passerby and a vehicle, a function of detecting a road fence, a function of detecting a variety of road markings or the like.

The variety of road markings that exist on a road include, for example, a white crosswalk, a single white line, a double white line, a triple white line, a yellow single line, a double yellow line, a white arrow line, or the like. The road markings are usually parallel to a direction of traffic on the road.

In the following explanation, colors of the markings are not distinguished, and the road markings are collectively called a "white line". However, this is merely for explanation, and the lines may be other colors. After detecting a white line type, a color of the line may be supplementarily distinguished, for example, by a color in a color image.

Each of the variety of white line types has a specific meaning of instruction for driving in traffic. The detection of the white line type is helpful to realize safe driving for a driver. According to a difference in the white line type of the road on which the vehicle runs, a different weight is given for the detection of passersby or for a warning for vehicles.

Moreover, information on the white line type plays an important role for unmanned driving and a drive assist, i.e. a travel path is predicted and an automatic instruction of braking is provided.

SUMMARY OF THE INVENTION

It is a general object of at least one embodiment of the present invention to provide an image processing apparatus and an image processing method that appropriately detect a road marking having linear shape.

In one embodiment, a linear road marking detection method includes the steps of obtaining a u-disparity map including a road surface region; determining a road vanishing point on the u-disparity map; obtaining a first resolution probability distribution diagram of a line in a predetermined region in a vicinity of the road vanishing point, from a first resolution represented by a first predetermined polar point interval and a first predetermined polar angle interval; and determining different types of the linear road marking based on a relation between an actual distance between lines parallel to each other in the physical world and a corresponding polar angle in the first resolution probability distribution diagram of the lines parallel to each other.

In another embodiment, a linear road marking detection apparatus includes a u-disparity map acquisition unit that acquires a u-disparity map including a road surface region; a road vanishing point determination unit that determines a road vanishing point on the u-disparity map; a first resolution probability distribution diagram acquisition unit that acquires a first resolution probability distribution diagram of a line in a predetermined region in a vicinity of the road vanishing point, from a first resolution represented by a first predetermined polar point interval and a first predetermined polar angle interval; and a different type linear road marking section unit that determines different types of the linear road marking based on a relation between an actual distance between lines parallel to each other in the physical world and a corresponding polar angle in the first resolution probability distribution diagram of the lines parallel to each other.

According to an embodiment of the present invention, an image processing apparatus and an image processing method, which detect the respective road markings having linear shape such as a crosswalk, an arrow on a road, a white character on the road, a lane line on the road, for example, and contribute to a drive assist of a vehicle, are provided.

BRIEF DESCRIPTION OF THE DRAWINGS

Other objects and further features of embodiments will be apparent from the following detailed description when read in conjunction with the accompanying drawings, in which:

Fig. 1 is a schematic diagram illustrating an example of a vehicle automatic control system 100 according to a first embodiment;
Fig. 2 is a schematic diagram illustrating an example of a binocular camera 101 and an image processing module 102 used in the vehicle automatic control system 100 according to the first embodiment;
Fig. 3 is a diagram illustrating an example of a fundamental functional configuration of a road marking detection unit 300 according to the first embodiment;
Fig. 4 is an overall flowchart illustrating an example of a process of detecting a road marking having linear shape according to the first embodiment;
Fig. 5 is a diagram illustrating an example of a disparity map schematically including a road surface region and a U-disparity map obtained by transforming the disparity map;
Fig. 6A are diagrams schematically illustrating a line through a candidate road vanishing point (CVP) on the U-disparity map and a candidate road vanishing point (CVP) illustratively represented by a polar point b and a polar angle θ (center), a probability distribution diagram of all lines for all fundamental points (left), and a corresponding white line on a gradation image (right);

Fig. 6B is a diagram schematically illustrating a polymerization distribution curve of a candidate road vanishing point (CVP), i.e. the fundamental point b, corresponding to the probability distribution diagram of the left diagram of Fig. 6A;

Fig. 6C is a schematic diagram determining a vanishing point x0 by the polymerization distribution curve;

Fig. 6D is a diagram which is the same probability distribution diagram as the left diagram of Fig. 6A where a region close to the vanishing point and including a majority of lines is labelled by a rectangular frame;

Fig. 7 is a diagram illustrating a probability distribution diagram or an angular distribution diagram in a predetermined resolution obtained by independently extracting the rectangular frame part, i.e. the region in the vicinity of the road vanishing point, in Fig. 6D;

Fig. 8A shows diagrams illustrating an example of an original gradation image (center) and examples of angular distribution diagrams in two different resolutions (left and right);

Fig. 8B is a diagram illustrating an example of a U-map corresponding to the original gradation image;

Fig. 9 shows diagrams schematically illustrating an example of a correspondence relation between a point in the angular distribution diagram and a line in the gradation image;

Fig. 10A is a diagram schematically illustrating a visual principle in three dimensions;

Fig. 10B is a diagram illustrating a relation between a real distance and a pixel distance in the case where two points P and Q have the same depth in the real world;

Fig. 11 is a diagram illustrating a relation between a pixel width, width between two road white lines in the U-disparity map and an inclination angle of the road white line;

Figs. 12A to 12C are diagrams schematically illustrating corresponding relations between the road marking having linear shapes on the various roads on the gradation image and corresponding points (or corresponding curves) on probability distribution diagrams in the first resolution;

Fig. 12D is a diagram illustrating a roadway line part represented by circles on the gradation image which is divided and deferred;

Fig. 13 is an overall flowchart illustrating a method of detecting a road marking having linear shape 500 according to a third embodiment;

Fig. 14A is a diagram schematically illustrating an example of a roadway line including different numbers of white lines;

Fig. 14B is a diagram schematically illustrating different types of roadway lines on the gradation image and corresponding curves on a high resolution angular distribution diagram;

Figs. 15A and 15B are diagrams illustrating roadway lines on the gradation image, corresponding curves on the high resolution angular distribution diagram and a density list corresponding to lines in the gradation image; and

Fig. 16 is a block diagram showing an illustrative calculation system 600 adapted to a realization of the embodiment of the present invention.

## DESCRIPTION OF THE PREFERRED EMBODIMENTS

In the following, embodiments of the present invention will be described with reference to the accompanying drawings.

The detection of road marking having linear shape according to each embodiment makes a disparity map and/or a U-disparity map (including further a gradation image or a color image, as necessary) an operational object, and in the following, the disparity map and the U-disparity map as an overhead view of the disparity map will be briefly introduced.

The disparity map is an image that makes any image as a standard, a size of which is a size of the standard image and an element value is a disparity value. The disparity map includes distance information of a scene. The disparity map can be obtained by calculating from a left image and a right image imaged by a binocular camera, or obtained by calculating from a depth map in a binocular vision diagram.

Coordinates of a point in an ordinary two dimensional disparity map are usually expressed by $(u,v)$, where u is an abscissa, v is an ordinate, and a pixel value of a pixel at the point $(u,v)$ is expressed by $d(u,v)$ and expresses a disparity at the point $(u,v)$.

The disparity overhead view or the U-disparity map can be obtained by calculating from the disparity map. A gray value of an arbitrary one point $(u,v)$ in the U-disparity map is a number of points which has a disparity value of d in an array with an abscissa of u corresponding to the disparity map.

Details of a concept of an disparity map, acquisition, and how to extract a U-disparity map from a disparity map are described in the prior art by the same applicant as the present application, with a theme of "Method and apparatus for detecting road partition" under the application number of 201110409269.1.

The explanation will be performed in the following order:

<1, First embodiment>

<1.1, Vehicle automatic control system>

<1.2, Camera and image processing module>

<1.3, Detection apparatus for road marking with linear shape>

<2, Second embodiment: Detection method for road marking with linear shape>

<3, Third embodiment: Detection method for road marking with linear shape>

<4, Fourth embodiment: Calculation system for detecting road marking with linear shape>

<1, First embodiment>

<1.1, Vehicle automatic control system>

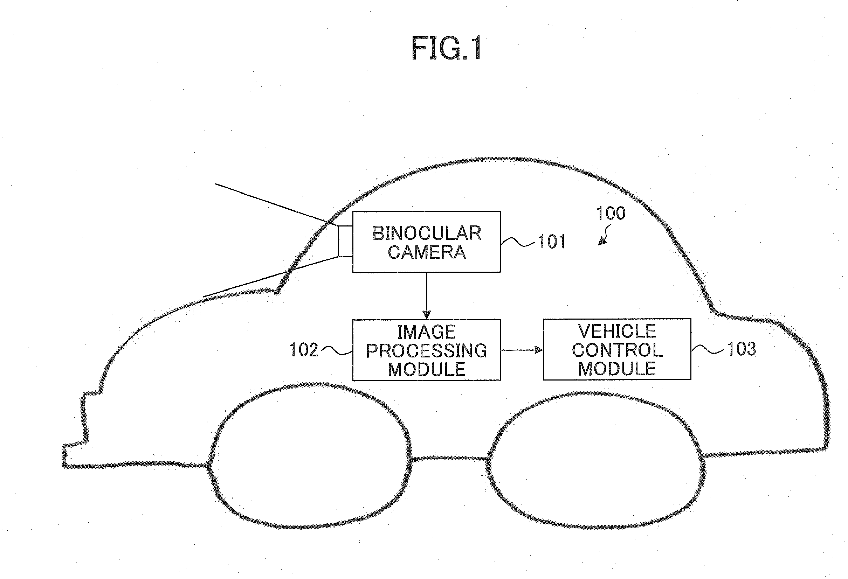

Fig. 1 is a schematic diagram illustrating a vehicle automatic control system 100 according to a first embodiment of the present invention. The vehicle automatic control system 100 is attached to the vehicle. The vehicle automatic control system 100, for example, is provided with two cameras 100, an image processing module 102 and a vehicle control module 103. The binocular camera 101 may be attached at a position near a vehicle back mirror, and it captures a front scene of the vehicle. A captured image of the front scene of the vehicle is input to the image processing module 102. The image processing module 102 analyzes the input disparity map, and performs various detection processes, for example, the detection of road markings having linear shape according to the present embodiment, and other road surface detection processes, a fence detection process, a passerby detection process or the like. The vehicle control module 103 receives a signal output by the image processing module 102, generates a control signal based on the road marking having linear shape on the current road which is obtained by detection, for example, various road division lines (for example, lines dividing the respective lanes), and information on the road surface, the fence, the passerby or the like, and controls a travel direction, a travel velocity or the like of the vehicle.

The vehicle automatic control system 100 shown in figures is merely an example, and may be provided with other members, such as a part for GPS navigation.

<1.2, Camera and image processing module>

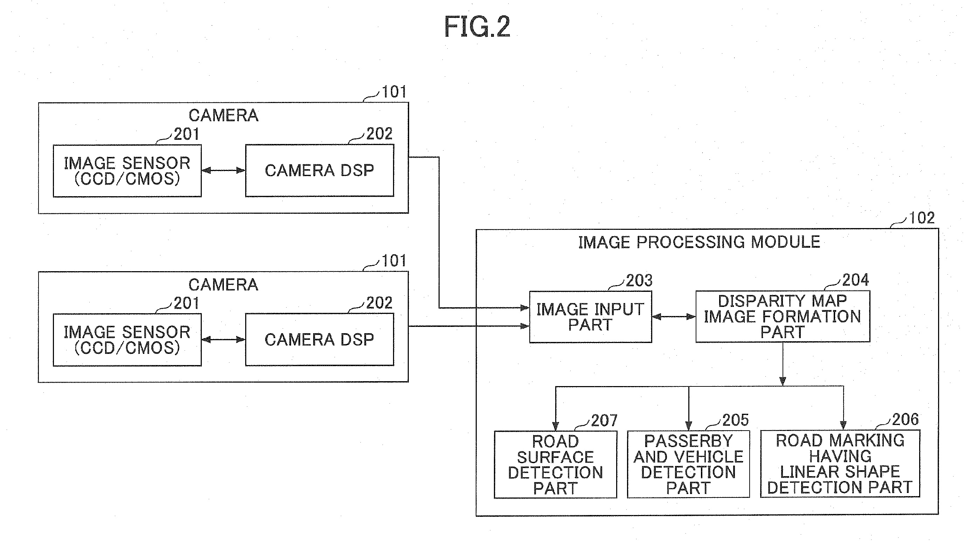

Fig. 2 is a schematic diagram illustrating an example configuration of the binocular camera 101 and the image processing module 102 which can be used for the vehicle automatic control system 100 shown in Fig. 2, according to the present embodiment.

As shown in Fig. 2, on the left side two cameras 101 are shown, and the binocular camera 101 is provided with an image sensor 201 and a camera digital signal processor (DSP) 202. The image sensor 201 converts a light signal into an electronic signal, converts the captured image of front of the current vehicle into an image signal, and further transmits the results to the camera DSP 202. As necessary, the binocular camera 101 may be further provided with a lens, a filter or the like. In the present equipment, there may be provided two or more (not shown) cameras 101. After these cameras have been coordinated with each other, plural images can be captured simultaneously, and it makes binocular image formation or multiview image formation convenient. The camera DSP 202 converts an analogue image signal into a digital image signal and sends it to the image processing module 102.

As shown in the functional block diagram of the image processing module 102, the image processing module 102 may be provided with, for example, an image input part 203, a disparity map image formation part 204, a road surface detection part 207, a passerby and vehicle detection part 205, a road marking having linear shape detection part 206, or the like. The image input part 203 can acquire images at a predetermined time interval. The disparity map image formation part 204, using a binocular visual principle, converts a pair of input digital images into a disparity map. The road surface detection part 207 can detect a road surface, for example, based on a disparity map (and/or a gradation image) from the disparity map image formation part 204. The passerby and vehicle detection part 205 can detect a passerby and a vehicle, for example, based on the disparity map (and/or the gradation image) from the disparity map image formation part 204. The road marking having linear shape detection part 206 detects a road marking having linear shape, for example, based on the disparity map (it may be based on the gradation image) from the disparity map image formation part 204.

The binocular camera image formation that acquires a disparity for subsequence shown in Fig. 2 is merely an example. For example, it may be provided using a stereo camera or the like based on another infrared light flight velocity or based on a texture light. Moreover, a camera apparatus may not be provided on the vehicle, and for example, the vehicle can receive image data or the like from outside by a wireless network.

The image processing module shown in Fig. 2 is merely an example, and a part of it, for example, the road surface detection part 207 may be omitted, and another part of addition, for example, the fence detection part, the U-disparity map acquisition part, or a V-disparity map acquisition part may be provided, and objection detection based on the gradation image or the like may be provided.

In the following, a configuration of the road marking having linear shape detection part, which attracts attention in the present invention, and a process of operation will be introduced as a point of major emphasis.

<1.3, Detection apparatus for road marking having linear shape>

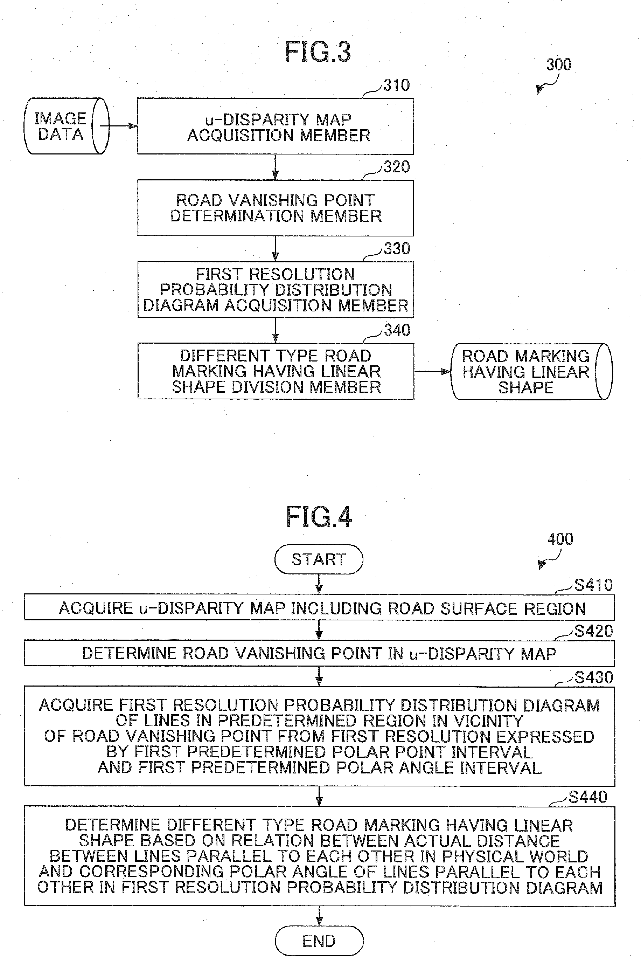

In the following, with reference to the explanation for Fig. 3, it will be illustrated according to a fundamental functional configuration of the detection apparatus for road marking having linear shape of the first embodiment of the present invention. Fig. 3 is a diagram illustrating an example of the fundamental functional configuration of the detection apparatus for road marking having linear shape 300 according to the first embodiment of the present invention.

Fig. 3 is a diagram illustrating an example of the fundamental functional configuration of the detection apparatus for road marking having linear shape 300 according to the first embodiment of the present invention, and the detection apparatus for road marking having linear shape 300 is used for the road marking having linear shape detection part 206, shown in Fig. 2. Inputs for the detection apparatus for road markings having linear shape 300 are image data, for example, a left image and a right image that the binocular camera images, and an output is a kind of or some road markings having linear shapes obtained by the detection.

As shown in Fig. 3, the detection apparatus for road marking having linear shape 300 according to the first embodiment of the present invention may be provided with a disparity map acquisition member 310 that acquires a u-disparity map including a U road surface region, a road vanishing point determination member 320 that determines a road vanishing point on the u-disparity map, a first resolution probability distribution diagram acquisition member 330 that acquires a first resolution probability distribution diagram of lines in a predetermined region in a vicinity of the road vanishing point from a first resolution expressed by a first predetermined polar point interval and a first predetermined polar angle interval, and a different type road marking having linear shape division member 340 that determines a road marking having linear shape of a different type, based on a relation between a distance between lines parallel to each other in a physical world and a corresponding polar angle of the lines parallel to each other in the first resolution probability distribution diagram. However, the members in the detection apparatus for road marking having linear shape 300 may be realized by a software program, and for example, may be realized by a CPU plus RAM and ROM or the like in a general purpose computer and software code which runs in it. The software program can be stored, for example, on a recording medium such as a flash memory, a floppy disk, a hard disk, or an optical disk, and when it runs, for example, it is loaded into a random access memory RAM, and executed by the CPU. Moreover, other than the general purpose computer, furthermore, it can be realized by cooperation between a dedicated integrated circuit and software. The integrated circuit is realized, for example, by at least one of a MPU (microprocessor unit), a DSP (digital signal processor), a FPGA (field programmable gate array), an ASIC (application specific integrated circuit), and the like. Such a general purpose computer, a dedicated integrated circuit or the like can be loaded, for example, on a vehicle, and for example communicate with image forming equipment such as a camera attached on the vehicle, process a two-dimensional image and/or a perspective view obtained by the camera imaging and obtain a detection result of a road marking having linear shape. The program may control driving of the vehicle according to the detection result of the road marking having linear shape, and for example, issues alert information, automatically brakes, or activates an emergency protection device or the like. Moreover, the respective members of the detection apparatus for road marking having linear shape 300 can be realized by dedicated hardware, for example, a specific field programmable gate array, a dedicated integrated circuit or the like. Moreover, the respective members of the detection apparatus for road marking having linear shape 300 also can be realized by a coupling of software and hardware.

However, an arrow shown in Fig. 3 shows that there is a logical relation between functions of two members, and the two members can be connected in an operable way directly or indirectly. Moreover, even if an arrow connection in a specific direction is not shown between specific two members in Fig. 3, it does not indicate inevitably that a logical relation in the direction between both members does not exist. On the other hand, if an operable connection relation between both members exists, for example, there may be a logical relationship among the first resolution probability distribution diagram acquisition member 330, the different type road marking having linear shape division member 340 and the U-disparity map acquisition member 310; and among them, the first resolution probability distribution diagram acquisition member 330 and the different type road marking having linear shape division member 340 have a possibility for it to be necessary to use the U-disparity map acquired by the U-disparity map acquisition member 310 during the operation process.

Configurations and numbers of the respective units in the detection apparatus for road marking having linear shape 300 do not limit the scope of the present invention. According to the first embodiment of the present invention, the U-disparity map acquisition member 310, the road vanishing point determination member 320, the first resolution probability distribution diagram acquisition member 330, and the different type road marking having linear shape division member 340 can be merged into an independent member; proper functions and operations are executed; and thereby it can be realized. Or, the U-disparity map acquisition member 310, the road vanishing point determination member 320, the first resolution probability distribution diagram acquisition member 330, and the different type road marking having linear shape division member 340 are divided into further smaller units, and respective functions and operations for them can be realized.

Moreover, however, the configuration shown in Fig. 3 is not exclusive, but the detection apparatus for road marking having linear shape 300 may be provided with other members; for example, a display member used for a result after the different type road marking having linear shape division member 340 processes, and a communication member for transmitting related information and/or a result of an intermediate process to the outside or the like.

In the following, with reference to Figs. 4 to 9, an exemplification of a function and an operation of the respective members of the detection apparatus for road marking having linear shape 300 will be explained in detail.

<2, Second embodiment: detection method for road marking having linear shape>

Fig. 4 is an overall flowchart illustrating a detection method for road marking having linear shape 400 according to a present embodiment of the present invention.

As shown in Fig. 4, the U-disparity map acquisition member 310 acquires a u-disparity map including a road surface region (step S410).

As described above, by imaging by using a binocular camera, a multi-eye camera or a stereo camera and calculating, a disparity map including a road surface region is acquired; by converting from the disparity map a U-disparity map is acquired, or from a stereoscopic image a depth diagram is acquired; by the depth diagram a disparity map is acquired; and by converting from the disparity map a U-disparity map is acquired.

In the case of acquiring a disparity map including a road surface region at first and then by converting the disparity map into a U-disparity map, any of the following methods may be used, for example, for acquiring the disparity map of the road surface region from the image acquired by the stereo camera, for example. That is, the road surface region may be specified manually, for example, all points, heights from the road surface which are greater than a predetermined height threshold rh may be deleted in the disparity map. This is because, there is a possibility that the point, a height of which is greater than rh, represents noise or the like, such as a vehicle on a road, a person riding a bicycle, a power pole or the like; or using the respective road surface estimation or detection method, the road surface is detected, and the disparity map including a road surface region may be acquired, or a road surface detection method introduced by the application by the same applicant as the present application under the application number of 201210194074.4 may be used.

After the disparity map including the road surface region is acquired, an overhead view of the disparity map, i.e. the U-disparity map, can be acquired.

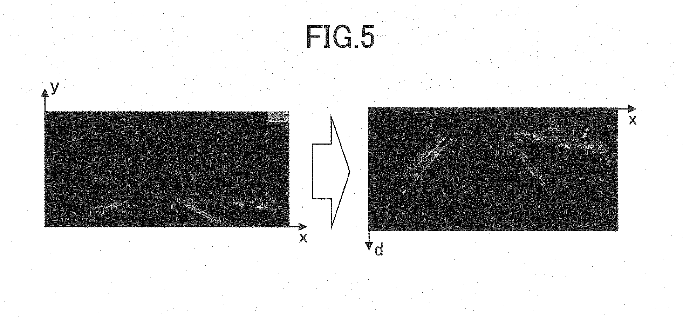

Fig. 5 schematically illustrates a disparity map including a road surface region (left figure) and a U-disparity map acquired by converting from the disparity map (right figure). In the left figure, abscissa and ordinate are x and y. In the right figure, abscissa and ordinate are x and d.

Furthermore, here, post processing such as noise reduction can be performed for the U-disparity map acquired as above. Among them, according to a present embodiment, all points, gray values of which are less than a predetermined threshold value, are removed from the disparity overhead view, i.e. gray values of the points, gray values of which are less than the predetermined threshold value, are set to zero. This is because the noise is usually a discrete point and many noise points, disparities of which are the same, do not exist in each array of the disparity map. Moreover, in order to avoid removing unconsciously road division lines of white lines, for example, a preferable predetermined threshold is set to a small value, for example, one.

As explained above, the disparity map is acquired and the U-disparity map is acquired from the disparity map. However, this is merely an exemplification, and, for example, by processing or calculating an image acquired by a binocular camera a U-disparity map can be acquired directly. Or, by communicating directly from the outside via a wireless network, a U-disparity map including the road surface region can be received.

Returning to Fig. 4, in the u-disparity map a road vanishing point is determined (step S420).

According to the projection conversion principle publicly known by a person skilled in the art, it is found that lines parallel to each other, in the original three-dimensional space, cross at a point where a disparity value is zero (i.e. d=0) in the disparity map. The cross point is called a road vanishing point. In the disparity overhead view, a point, a disparity value of which is zero, is positioned on a horizontal line. The point, the disparity value of which is zero, is generically called a fundamental point, or a candidate road vanishing point. Examining a probability of existing respective lines passing through each fundamental point, a probability that a line as a road division passing through the road vanishing point exists is the maximum, or the most concentrative (i.e. the most non-dispersive).

That causes the road vanishing point to be determined based on such a polymerization distribution.

In the present embodiment, in the u-disparity map, determining the road vanishing point includes the following:

(1) In the U-disparity map, for each candidate road vanishing point, a probability that each line passing through the candidate road vanishing point exists is calculated, a probability distribution diagram of the line passing through each candidate road vanishing point is acquired, a corresponding candidate road vanishing point is assumed to be a polar point and a corresponding polar angle, each line is restricted by the polar point and the polar angle, then the probability distribution of a line of each candidate road vanishing point is acquired.

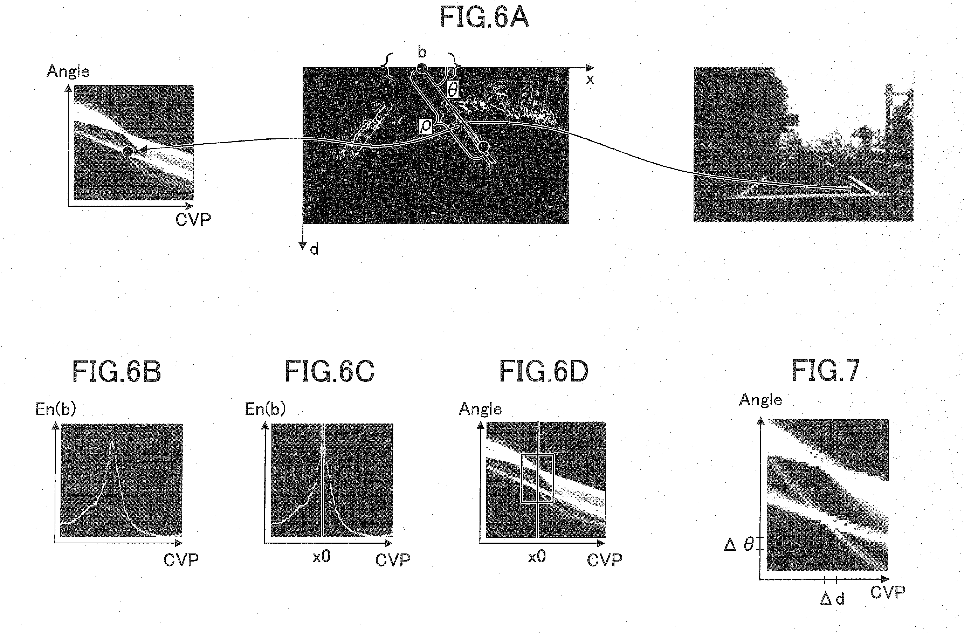

Here, the candidate road vanishing point will be abbreviated as CVP, a central diagram of Fig. 6A illustrates a candidate road vanishing point CVP on the U-disparity map, and parentheses in the diagram represent a position of a vanishing point zone waiting for selection. An abscissa is X and an ordinate is d, which are the same as in the right figure in Fig. 5. A position of the candidate road vanishing point CVP is expressed by the abscissa b (the ordinate is a disparity d=0), a line passing through the candidate road vanishing point CVP is expressed by a polar point b and a polar angle θ.

A left diagram of Fig. 6A schematically illustrates probability distribution diagrams of all lines of all fundamental points, wherein the abscissa represents each CVP point (i.e. an abscissa b), the ordinate represents an included angle (i.e. θ), and a value at a point (b, θ) represents a probability Dis(θ,b), i.e. a probability that a line determined by the polar point b and the included angle θ exists. The probability can be calculated, for example, according to a ratio of a number of non-zero points on the line in the U-disparity map to a number of all non-zero points in the U-disparity map.

As viewed from the embodiment of generating the U-disparity map, a white line on the right side of b on the gradation image in a right diagram of Fig. 6A is found to correspond to the line (b,θ) determined by the polar point b and the included angle θ in the central diagram of Fig. 6A, and as shown by an arrow curve to the central diagram of Fig. 6A to a right diagram of Fig. 6A. Accordingly, a pixel point at a large black point in the left diagram of Fig. 6A indicates an existence probability of a line (b, θ) determined by the polar point b and the included angle θ, and is found to correspond to the white line on the right side in the right diagram of Fig. 6A; in other words, to a predetermined extent, it characterizes a probability of existence of the right white line in the right diagram of Fig. 6A.

However, for the probability distribution diagram, based on a predetermined distance between polar points and on a predetermined distance between polar angles, probability calculation for each line can be performed; therefore, in acquiring a probability distribution diagram with different resolution, the smaller the distance between polar points is, the smaller the distance between polar angles is, and the resolution of the probability distribution diagram becomes higher.

(2) Based on the probability that each line passing through each candidate road vanishing point exists, by acquiring a degree of polymerization representing an extent of polymerization of distributions of a probability that a line of each candidate road vanishing point exists, a polymerization distribution of the candidate road vanishing point is acquired.

For each candidate road vanishing point cvp (i.e. it may be called a fundamental point b), the polar angle θ is changed, thereby a pair of related lines are acquired. If this pair of lines pass through a real vanishing point, the probability of each of these lines is, if it is not quite large (i.e. lines on which a white line is located), it is quite small (number of points on the line is quite few). From an angle of information theory, the extent of polymerization of the probability distribution of this pair of lines is convergent. If this pair of lines do not pass through the real vanishing point, the extent of polymerization of the probability distribution of this pair of lines is dispersive.

In order to measure the extent of polymerization of the probability distribution of each pair of lines quantitatively (convergence or dispersion), in an example, it can be calculated using information entropy, for example, the following formula (1) indicates a degree of polymerization En(b) of the candidate road vanishing point CVP (i.e. the fundamental point b):

$$(\mathrm{Formula}\ 1)$$

$$En(b) = \sum_{\theta} Dis(\theta, b).\log(Dis(\theta, b))$$

Among them, the larger the degree of polymerization En(b) of a candidate road vanishing point CVP (i.e. fundamental point b)), the higher the extent of polymerization of the probability distribution that a line related to the candidate road vanishing point CVP (i.e. fundamental point b) exists is, i.e. a degree of dispersion is lower.

Based on the degree of polymerization of each candidate road vanishing point CVP (i.e. fundamental point), a polymerization distribution of the candidate road vanishing point CVP (i.e. fundamental point b) is acquired. Fig. 6B is a diagram schematically illustrating the polymerization distribution curve of the candidate road vanishing point CVP (i.e. fundamental point) corresponding to the probability distribution diagram of the left diagram of Fig. 6A. Among them, the abscissa is a position of each candidate road vanishing point CVP (i.e. fundamental point b), and the ordinate En(b) is a degree of polymerization corresponding to each candidate road vanishing point CVP (i.e. fundamental point b).

(3) The road vanishing point is determined based on the polymerization distribution curve of the candidate road vanishing point.

As shown in Fig. 6B, the point where the value of En(b) is the maximum means that the corresponding pair of lines is the most convergent, and the value of corresponding b is a position of the road vanishing point on the U-map. As shown in Fig. 6D, the vanishing point is x0, and the corresponding entropy is a position where a vertical line passing through the point x0 and the En(b) curve crosses in the drawing. After the road vanishing point is determined, on the probability distribution diagram, the probability of a line passing through the road vanishing point can be labeled, as shown by the vertical line in Fig. 6D; this line passes through the vanishing point x0 and is perpendicular to the X axis. Fig. 6D is the same probability distribution diagram as the left diagram of Fig. 6A. A region including most of the lines close to the vanishing point is labeled by a rectangular frame in Fig. 6D. For the purpose of explanation, an angular distribution of the rectangular frame is also called an angular distribution diagram, and includes a probability of most of the lines passing through the vanishing point.

Regarding the method of determining the road vanishing point in the U-disparity map, with reference to the content of the prior applications, there are the patent application by the common applicant, i.e. RICOH company, LTD. with the title "Road curve type detection method and apparatus" under the application number CN201210262021.1, and the patent application by the common applicant, i.e. RICOH company, LTD. with the title "Road division detection method and apparatus" under the application number CN201110409269.1, the whole text of which patent documents can be incorporated by reference.

Returning to Fig. 4, from the first resolution expressed by the first predetermined polar point interval and the first predetermined polar angle interval, a first resolution probability distribution diagram of lines in a predetermined region in the vicinity of the road vanishing point is acquired (step S430).

After the road vanishing point is determined, according to the position of the vanishing point, in a region in the vicinity of the road vanishing point, different interval step size between polar points and different interval step size between polar angles are selected, therefore, a probability distribution diagram of a resolution, a height of which is different, can be acquired. The region in the vicinity of the road vanishing point indicates mainly a probability distribution of lines of respective kinds of angles in the vicinity of the road vanishing point, therefore, it may be called an angular distribution. The angular distribution in the present embodiment indicates a probability distribution diagram of a kind of resolution in the region in the vicinity of the road vanishing point.

Fig. 7 is a diagram illustrating a probability distribution diagram or an angular distribution diagram of a kind of resolution obtained by extracting independently the rectangular frame part (i.e. region close to the road vanishing point) in Fig. 6D. A size of a range of the region in the vicinity of the road vanishing point is set as necessary, set according to experience, or determined by online learning.

In the angular distribution diagram shown in Fig. 7, the same as the probability distribution diagram of the left diagram of Fig. 6A or Fig. 6D, the pixel value Dis ($\theta$, b) at A ($\theta$,b) is a value of probability between 0 and 1, a probability that a line with a position of polar point of b and a polar angle of $\theta$ exists is measured. The angle distribution diagram can be filtered; for example, only points pixel values which are larger than a predetermined threshold are suspended. Accordingly, when a different threshold is selected, the number of points left in an image is different. An abscissa in the image is a CVP (i.e. the abscissa of the candidate road vanishing point), a resolution on the abscissa is determined to be a distance between adjacent vanishing points to be selected in each pair. In a description later this resolution will be called a distance resolution, and a step size will be denoted $\Delta d$, as shown in Fig. 7. An ordinate in the image is an angle (i.e. $\theta$), a resolution of the ordinate is determined by an angle between adjacent lines passing through the same vanishing point in the U-map in each pair, in the following, the resolution will be called an angle resolution, a step size will be denoted $\Delta\theta$, and as shown in Fig. 7. When an Angle-CVP angle distribution diagram is generated, a different distance resolution, angle resolution and a probability (Dis($\theta$,b)) threshold can be selected.

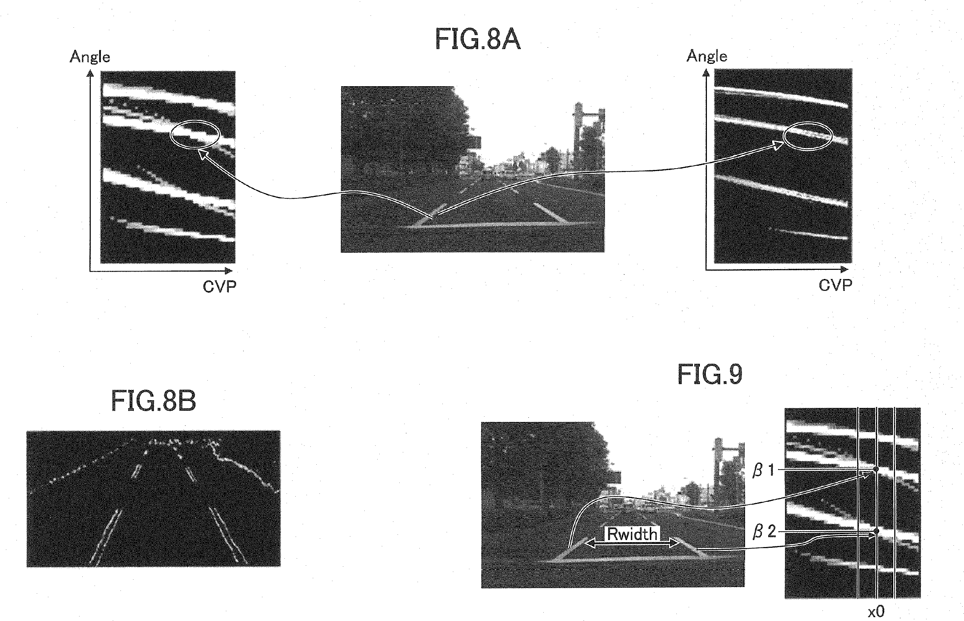

Left and right diagrams of Fig. 8A illustrate examples of angle distribution diagrams of two different resolutions, and here is performed a filter process with low probability threshold. Relatively speaking, the left diagram of Fig. 8A is an example that obtains an angle distribution diagram with a low resolution using a low distance resolution and angle resolution; the right diagram of Fig. 8A is an example that obtains an angle distribution diagram with a high resolution using a high distance resolution and an angle resolution. Here, a value of a resolution step size (distance step size/angle step size) of the former (the left diagram of Fig. 8A) is about twice that of the latter (the right diagram of Fig. 8A). A central diagram of Fig. 8A is an original gradation image to which they correspond, and Fig. 8B is a corresponding U-map. As stated later, by angle distribution diagrams with different resolutions a white line type in the following can be determined, i.e. by using angle distribution diagram with low resolution a thick kind of a white line is determined, and by using angle distribution diagram with high resolution a thin kind of a white line is determined. The central diagram of Fig. 8A fixes a position of the left white line in the original gradation image, and corresponds respectively to partial images shown by oval regions in the left and right diagrams of Fig. 8A, as shown by the arrows in figures. As shown in the left and right diagrams of Fig. 8A, the same white line corresponds to a thick curve in the left diagram of Fig. 8A, and corresponds to a two-stripe thin curve (i.e. both sides of the original left white line). By using the above information, a type of a white line can be distinguished, and this feature will be explained in detail later.

Preferably, in the case of performing a coarse classification of a road marking with a linear shape (for example, a road way white line and a crosswalk, an arrow on the road and a white character on the road are distinguished), a resolution of the probability distribution diagram to be selected is a resolution that satisfies the following conditions, i.e. the resolution makes a white line (with two edges) on the gradation image does not correspond to two points (two thin points, in the case of the right diagram of Fig. 8A) but to a point (a coarse point, in the case of the left diagram of Fig. 8A) on the probability distribution diagram; or viewed from a local range, an actual appearance is that a white line on the gradation image corresponds not to two thin curves on the probability distribution diagram but to a curve which is thick by one section.

Instead, in the case where the selected resolution makes two edges of one white line on the gradation image correspond to two points on the probability distribution diagram (thin two points, in the right diagram of Fig. 8A), since a distance between such two thin points is quite short, by setting a threshold, two small points, a distance between which is less than the threshold, can be processed as one point, and it is advantageous in the following coarse classification process.

Returning to Fig. 4, based on a relation between an actual distance between lines parallel to each other in the physical world and a corresponding polar angle of the lines parallel to each other in a first resolution probability distribution diagram, a different type road marking having linear shape is determined (step S440).

The inventors of the present invention have found that there is a certain request relation between an actual distance between lines parallel to each other in the physical world and a corresponding polar angle of the lines parallel to each other in the first resolution probability distribution diagram; and in one example, according to the mutual relation, a classification of a road marking having linear shape can be determined.

As described above, a point on the angle distribution diagram represents a line on the original gradation image, and Fig. 6A shows this relation. In Fig. 9 are diagrams schematically illustrating this correspondence relation between the point on the angle distribution diagram and the line on the original gradation image. Points (b1,x0) and (b2,x0) are labeled by black points in a right diagram of Fig. 9. Here, x0 is the abscissa of the road vanishing point, and b1 and b2 are angles of two lines passing through the road vanishing point. As shown by curves with arrows in Fig. 9, the left white line in a middle diagram of Fig. 9 corresponds to the point (b1,x0), and the right white line in the middle diagram of Fig. 9 corresponds to the point (b2,x0). In the middle diagram of Fig. 9, Rwidth and its related two-headed arrow labels an actual distance between the two lines in the real three-dimensional space.

In the following, an exemplification of a kind of expression of the relation between the actual distance between the lines parallel to each other in the physical world and the corresponding polar angle of the lines parallel to each other in the first resolution probability distribution diagram will be demonstrated.

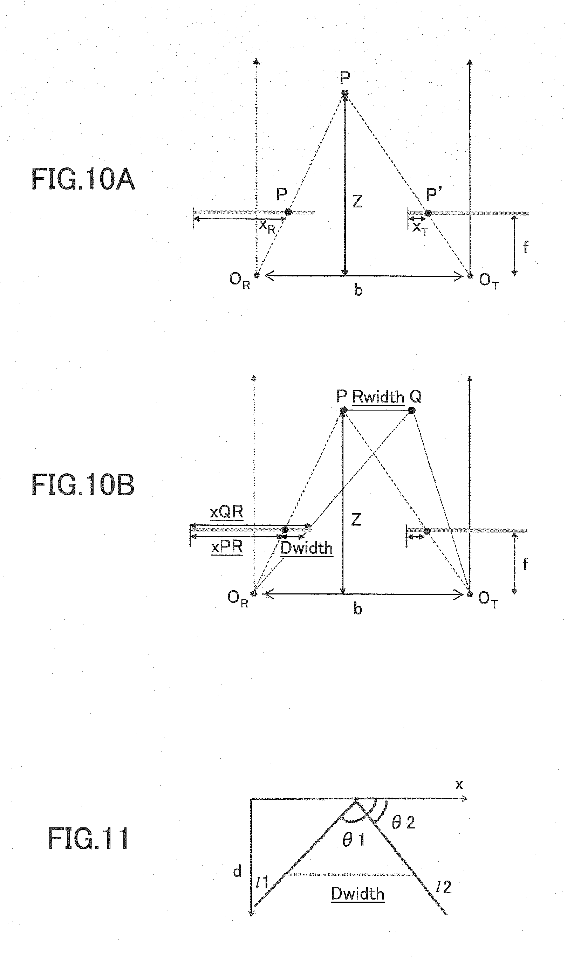

From the visual principle in three-dimensions shown in Fig. 10A, for a point P in the real world, the following formula 2 is obtained:

$$\text{(Formula 2)}$$

$$d = x_R - x_T = \frac{base \cdot f}{Z}$$

where base or base(b) is a baseline length, Z is a depth of the point P, f is a focal length of a camera, d is a disparity value of the point P, and xl and xr are horizontal coordinates corresponding to a pixel in left and right figures, respectively.

As shown in Fig. 10B, when two points P and Q exist in the real world which have the same depth, a real distance between them Rwidth (i.e. a real width) and a pixel distance (i.e. a pixel width) in the horizontal direction between corresponding pixel points on the disparity map satisfy the following formula 3:

$$\text{(Formula 3)}$$

$$\frac{Rwidth}{Dwidth} = \frac{Z}{f} = \frac{base}{d}$$

As described above, by overviewing and projecting the road surface region in the disparity map, a u-disparity map is acquired. As shown in Fig. 11, there are d disparities in the U-disparity map, and a pixel distance between the two road white lines Dwidth and an inclination angle of the road white lines (i.e. a polar angle θ, an angle between the white line and a line in which the candidate road vanishing point resides) satisfy the following formula 4:

$$\text{(Formula 4)}$$

$$ctg(\theta 1) - ctg(\theta 2) = \frac{Dwidth}{d}$$

where θ1 is an included angle between a roadside line 11 and a horizontal line in the U-disparity map, θ2 is an included angle between a roadside line 12 and the horizontal line in the U-disparity map, and ctg represents arc tangent.

Combining formula 4 and formula 3, a relation between the actual distance Rwidth between the lines parallel to each other in the physical world and a corresponding polar angle (θ1 and θ2) of the lines parallel to each other in the first resolution probability distribution diagram can be obtained:

(Formula 5)

$$ctg(\theta 1) - ctg(\theta 2) = \frac{Rwidth}{base}$$

As described above, the baseline length is a value known in advance, the actual distances between the various road white lines are generally different and have a possibility to satisfy a stipulation of a related regulation, and have a predetermined range. An angle in the white line U-disparity map can be easily obtained in the vicinity of the vanishing point on the angle distribution diagram (in particular, the angle distribution diagram of low resolution). Accordingly, using the relation in the formula (5), various road markings having linear shapes can be sectioned, and according to this, a travelling road white line and other white line types are distinguished.

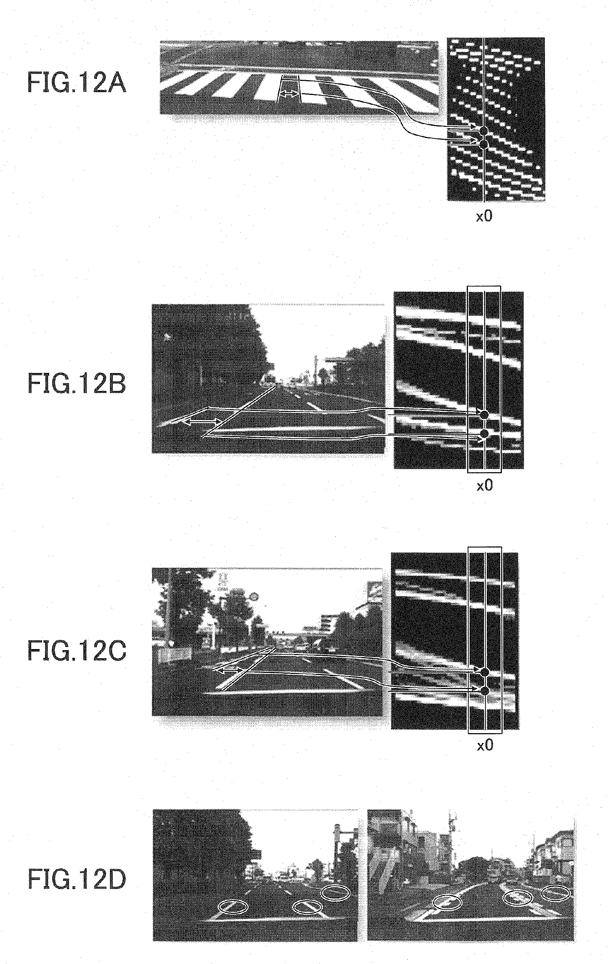

Figs. 12A to 12C are diagrams schematically illustrating corresponding relations between various road markings having linear shapes on the gradation image and corresponding points (or corresponding curves) on the probability distribution diagram of the first resolution.

On the respective angle distribution diagram of a low resolution, the actual distance between the white lines is labeled by a line with arrows on both ends, and an edge of the white line is labeled by a thick line. A point corresponding to the white line is labeled by a point, and its corresponding relation is indicated by a curve with an arrow.

As shown in Fig. 12A, a left diagram shows a gradation image including a crosswalk, and a right diagram shows a corresponding low resolution angle diagram. It is found that corresponding to plural crosswalks in the gradation image there are plural points on a vanishing point vertical line on the low resolution angle distribution diagram. The actual distance between lines corresponding to adjacent points of each pair on the low resolution angle distribution diagram calculated according to the formula (5) is smaller than a distance between general roadway lines, and distances calculated from adjacent points of the respective pairs are almost the same. According to the above features, a white line of the above crosswalk type can be determined.

As shown in Fig. 12B, a left diagram shows a gradation image including an arrow white line and a roadway line, and a right diagram shows a corresponding low resolution angle diagram. Given an actual distance between adjacent points of each pair along a line passing through a vanishing point and being orthogonal to the x-axis on the low resolution angle distribution diagram, the roadway line is determined by the actual distance, and furthermore, the arrow white line is determined by a distance between the determined roadway line and the adjacent points. It is found that the actual distance between the arrow white line and the roadway line white line is shorter than the actual distance between the roadway lines, and is in the predetermined range. Accordingly, the arrow type white line as described above can be determined.

As shown in Fig. 12C, a left diagram shows a gradation image including a white character on a road surface and a roadway line, and a roadway line; and a right diagram shows a corresponding low resolution angle diagram. Given an actual distance between adjacent points of each pair along a line passing through a vanishing point and being orthogonal to the x-axis on the low resolution angle distribution diagram by using the above formula (5), the roadway line is determined by the actual distance; and furthermore, the white character on the road surface can be determined by a distance between determined roadway line and the adjacent points. The acquired distance between the white character on the road surface and the roadway line is shorter than the actual distance between roadway lines, and is in the predetermined range. Accordingly, the white character on the road surface described as above can be determined.

After detecting the type of the crosswalk, the arrow line, the white character on the road surface or the like, a roadway line is found under various road conditions, and it is shown by a part expressed by a circle on the gradation image shown in Fig. 12D.

Based on a relation between actual distances between lines parallel to each other in various physical worlds shown in Figs. 12A to 12C and corresponding polar angles of the lines parallel to each other in the first resolution probability distribution diagram, an exemplary method of sectioning marking having linear shapes of different types can be performed as follows:

(1) determining a polar angle of each line for which a position of a polar point in the first resolution probability distribution diagram is positioned at the road vanishing point and a probability is greater than a predetermined threshold, and
(2) based on the polar angle of each line and a relation between an actual distance between lines parallel to each other in the physical world and the corresponding polar angle of the lines parallel to each other in the first resolution probability distribution diagram, calculating an actual distance between adjacent lines in the physical world, among the lines in the first resolution probability distribution diagram, and
(3) determining a marking having linear shapes of different types, based on the actual distance in the physical world between the adjacent lines among the lines calculated by at least a part.

In another exemplification, a table expressing the relation between the actual distance between lines parallel to each other in the physical world and the corresponding polar angle of the lines parallel to each other in the first resolution probability distribution diagram may be prepared in advance and stored. For example, in an array of data items in the table, the data term of the difference of arctangent of the polar angle in the left hand side of the formula (5) and the data term of the distance of the right hand side of the formula (5) divided by the baseline length may be recorded, and a marking having linear shape corresponding to the data item may be recorded. In this way, by calculating the difference of the arctangent between the corresponding polar angles of the lines parallel to each other in the first resolution probability distribution diagram, and then investigating the relation table saved in advance, a directly corresponding road marking having linear shape, for example, a crosswalk, an arrow line, a white character on a road, a roadway white line or the like is determined.

Retuning to Fig. 4, after step S440 ends, the process ends. By using the detection method of the road marking having linear shape according to the previous embodiment, the road vanishing point is determined in the U-disparity map, a probability distribution diagram of an arbitrary resolution of lines in a predetermined region in the vicinity of the road vanishing point is acquired, based on the relation between the actual distance between lines parallel to each other in the physical world and the corresponding polar angle of the lines parallel to each other in the first resolution probability distribution diagram, a marking having linear shape of different types can be determined.

<3, Third embodiment: method of detecting road marking having linear shape>

During the method of detecting road marking having linear shape according to the second embodiment, shown in Fig. 4, a coarse classification of a road marking with linear shape is performed, or in a large categorization a road marking having linear shape belonging to a different category is sectioned, for example, a crosswalk, a white arrow on a road, a white character of a road, and a roadway white line are sectioned. However, the roadway white line can be classified into various types, for example, a single white line, a double white line, and a triple white line, and for the white line having the same number of lines there is further a difference between a continuous line and a broken line or the like.

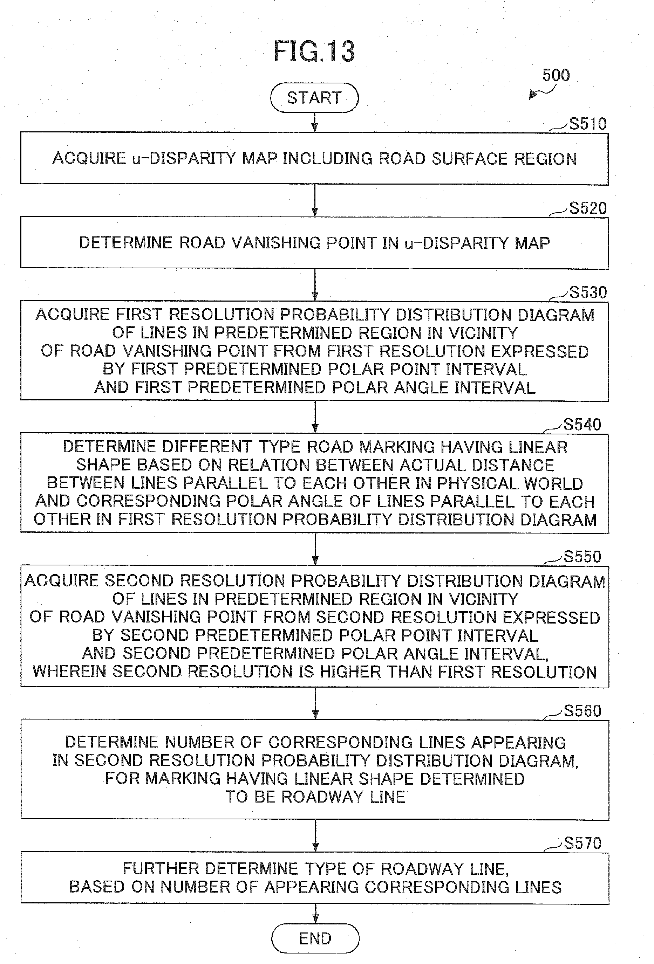

In the following, with reference to Fig. 13, an exemplary method of performing a coarse classification for a road marking having linear shape, and sectioning a type of a roadway line is described further detail.

Fig. 13 is an overall flowchart illustrating a method of detecting a road marking with linear shape 500 according to the third embodiment.

Steps S510 to S540 of the method 500 in Fig. 13 are fundamentally the same as steps S410 to S440 of the method 400 in Fig. 4, and for realization and functions the explanation for the corresponding steps in Fig. 4 can be referred to and here it is not explained repeatedly. A difference between the method of detecting the road marking having linear shape 500 in Fig. 13 and the method of detecting the road marking having linear shape 400 in Fig. 4 is in added steps S550 to S570, in which a detailed classification of a type of a roadway line is realized. In the following, steps S550 to S570 will be explained in detail.

The technological thought of the detailed classification of the type of the roadway white line is that, as shown in the right diagram of Fig. 8A as described above, in the probability distribution diagram with high resolution, a roadway white line with one white line, a roadway white line with two white lines and a roadway white line with three white lines have lines, numbers of which are correspondingly different. According to the above, for the point (or line), which was determined to be a roadway white line on the probability distribution diagram with low resolution in the previous embodiment, according to the number of corresponding lines appearing on the probability distribution diagram with high resolution, further classifying the type of the roadway line in detail is possible.

In one example, a roadway line is classified according to a number of white lines included in the roadway line, and according to the above, it is classified into, for example, a roadway line with one white line, a roadway white line with two white lines, a roadway white line with three white lines and the like.

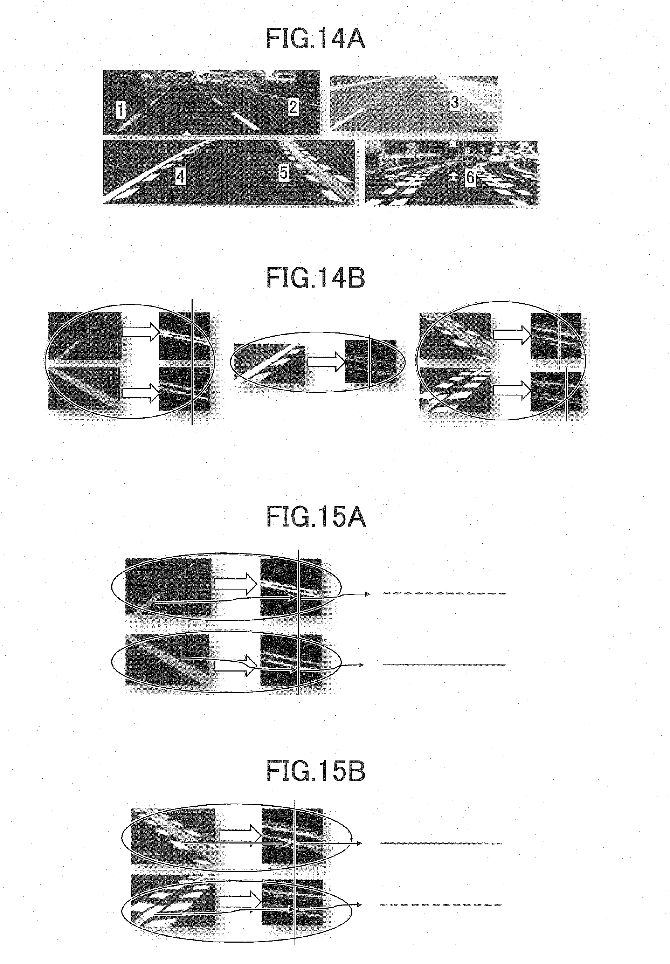

Fig. 14A is a diagram illustrating an example of roadway lines including different numbers of white lines, wherein the reference numerals 1, 2 and 3 indicate roadway lines each of which includes one white line, the reference numeral 4 indicates a roadway line which includes two white lines, and the reference numerals 5 and 6 indicate roadway lines each of which includes three white lines.

Such a roadway line with one white line, a roadway white line with two white lines, a roadway white line with three white lines appear, on the probability distribution diagram with low resolution, as a thick point or a thick line in any case (See the left diagram of Fig. 8A). However, on the probability distribution diagram with high resolution, an edge of each white line appears as a point or a thin line, and the roadway lines including different numbers of white lines appear as different numbers of points or different numbers of thin lines; therefore, according to the above, a sectioning between roadway lines of different types is performed.

Specifically, for example, as shown in a left diagram of Fig. 14B, a roadway line including one white line (it can be referred to in the gradation image, and is a broken line and a continuous line, respectively) is, in the corresponding high resolution angle distribution diagram, with two curves, and two points on a line passing through the vanishing point and being orthogonal to the X-axis.

Furthermore, for example, as shown in a central diagram in Fig. 14B, a roadway line including two white lines is, in the corresponding high resolution angle distribution diagram, with three curves, and three points on the line passing through the vanishing point and being orthogonal to the x-axis. The roadway line including two white lines appears, in the corresponding high resolution angle distribution diagram, with three curves, not four curves. This is because a distance between a right edge of a white line on the left side and a left edge of a white line on the right side is quite short, and the two edges appear as one curve in the angle distribution diagram.

For example, as shown in a right diagram in Fig. 14B, a roadway line including three white lines with two kinds is, in the corresponding high resolution angle distribution diagram, with four curves, and four points on the line passing through the vanishing point and being orthogonal to the x-axis. The roadway line including three white lines appears, in the corresponding high resolution angle distribution diagram, with four curves, not six curves. This is because, in the same way as above, a distance between adjacent edges of two white lines is quite short, and the two edges appear as one curve in the angle distribution diagram.

Therefore, according to different numbers of curves on the high resolution image, the type of roadway line including different numbers of white lines can be distinguished, and as shown by circles in Fig. 14B, the roadway line has the same number of white lines.

Based on the concept, as shown in Fig. 13, when the third embodiment is realized, at step S550, from a second resolution, expressed by a second predetermined polar point interval and a second predetermined polar angle interval, a second resolution probability distribution diagram of lines in a predetermined region in the vicinity of the road vanishing point is acquired wherein the second resolution is higher than the first resolution. Here the second resolution is set to be sufficiently high so that two edges of one white line on a road in the physical world are displayed as two points in the probability distribution diagram of the second resolution.

For the marking having linear shape which is determined to be a roadway line, the number of corresponding lines which appear in the second resolution probability distribution diagram is determined (step S560).

Based on the number of corresponding lines which appear, the type of roadway line is further determined (step S570).

Accordingly, the roadway line including different numbers of white lines can be sectioned.

In one example, additionally, in order to section roadway lines which include the same number of white lines but kinds of white lines (continuous line or broken line) are different, for a roadway line appearing as a number of same form lines on the second resolution probability distribution diagram, according to features of the roadway lines on the gradation image, the type of the roadway line is further distinguished.

Obviously, a broken road white line and a solid road white line appear on the gradation image as different features of continuity, and can be sectioned from each other.

In another example, for the type of the roadway line having the same number of white lines, according to a feature of the continuity difference, a broken line and a continuous line can be sectioned. For example, a density list of each line is calculated, and the feature of continuity can be expressed. A value of each point on the high resolution angle distribution diagram is an accumulation of lines on the original gradation image. When the high resolution angle distribution diagram is calculated, regarding a point to be calculated, this point recorded during the accumulation process corresponds to a value of X-coordinate in the original gradation image, a density list of this point is acquired, that is a density list to which lines correspond in the original gradation image. Using the density list a type of white line is accurately determined. As shown in Fig. 15A, a right edge of a primal white line corresponds to a point in the high resolution angle distribution diagram, as shown by the curve with an arrow. The density list of this point is shown in a right diagram in Fig. 15A. Each of these two kinds of roadway lines is a curve in the high resolution angle distribution diagram. But, the density lists are different. Therefore, the roadway lines each having a white line, wherein the kinds of the white line are different from each other, can be sectioned. In the same way, roadway lines each having three white lines, wherein the kinds of the white lines are different from each other, can be sectioned, as shown in Fig. 15B. The edges of the central white line in the respective roadway lines correspond to different density lists.

According to the method of detecting road markings having linear shape of the third embodiment, by using a probability distribution diagram of a first resolution (low resolution), a coarse classification of a road marking having linear shape can be realized, and by using a probability distribution diagram of a second resolution (high resolution), a detailed classification of the road markings having linear shape can be realized based on a number of lines appearing in a probability distribution diagram.

<4, Fourth embodiment: detecting a calculation system for road marking having linear shape>

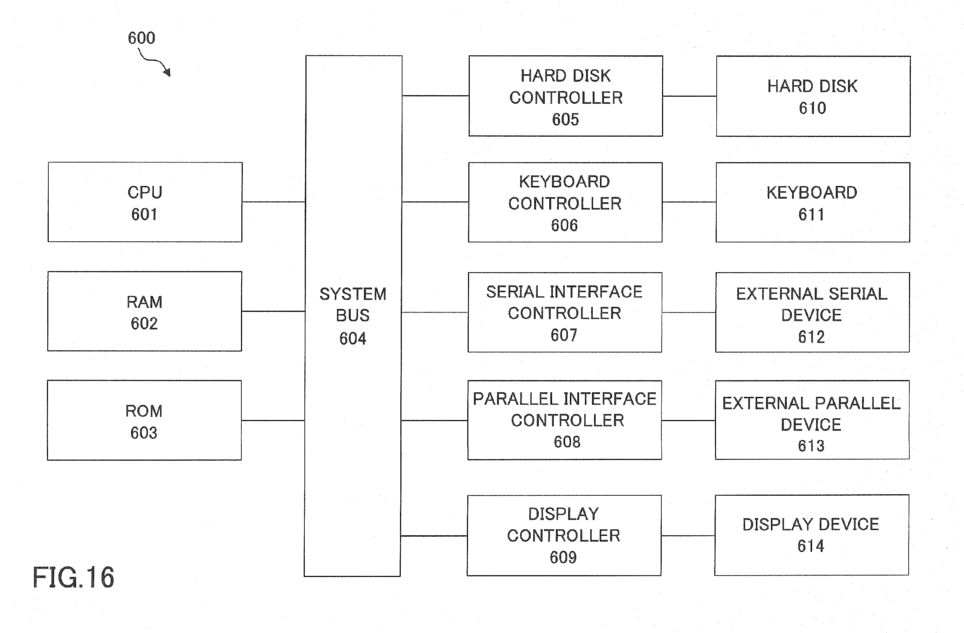

The present invention can be further realized by one kind of a calculation system for detecting road marking having linear shape. Fig. 16 is a block diagram showing an illustrative calculation system 600 adapted to a realization of the embodiment of the present invention. As shown in Fig. 16, the calculation system 600 may include a CPU (central processing unit) 601, a RAM (random access memory) 602, a ROM (read-only memory) 603, a system bus 604, a hard disk controller 605, a keyboard controller 606, a serial interface controller 607, a parallel interface controller 608, a display controller 609, a hard disk 610, a keyboard 611, an external serial device 612, an external parallel device 613, an external parallel device 614 and a display device 614. Of these devices or units, the CPU 601, the RAM 602, the ROM 603, the hard disk controller 605, the keyboard controller 606, the serial interface controller 607, the parallel interface controller 608 and the display controller 609 may be connected to the system bus 604. The hard disk 610 may be connected to the hard disk controller 605. The keyboard 611 may be connected to the keyboard controller 606. The external serial device 612 may be connected to the serial interface controller 607. The external parallel device 613 may be connected to the parallel interface controller 608. The display device 614 is connected to the display controller 609. The configuration block diagram shown by Fig. 16 is merely for the purpose of illustration, and does not limit the scope of the present invention. In a certain case, according to specific situation, some device may be added or removed.

A person skilled in the art would recognize that the present invention is realized as a system, device, method or a computer program product. Accordingly, the present invention may be realized in the following form, i.e. completely hardware, completely software (provided with firmware, resident software, microcode or the like), furthermore a combination of hardware and software, and in the present application, generally, a "circuit", a "module", a "device", or a "system". Moreover, in some embodiments, the present invention may be realized as a form of one or more computer program products in a computer readable medium, the computer readable medium being provided with computer readable program code.

An arbitrary combination of one or more computer readable media may be employed. The computer readable medium may be a computer readable signal medium or a computer readable recording medium. The computer readable recording medium may be, for example, a system of electricity, magnetism, light, electricity and magnetism, infrared light, or semiconductor, a device or an apparatus, or an arbitrary combination, but is not limited to them. Further specific examples of the computer readable recording medium (not a complete list) are an electrical connection having one or more lead wires, a portable computer disk, a hard disk, a random access memory (RAM), a read-only memory (ROM), an erasable programmable read-only memory (EPROM or a flash memory), an optical fiber, a portable compact disc read-only memory (CD-ROM), an optical memory, a magnetic memory device, or arbitrary and proper combinations thereof. In the present application, the computer readable recording medium may be any tangible medium that includes a program or stores a program, and the program may be used in an instruction execution system, apparatus or device, or may be used by combining them.

The computer readable signal medium may be included in a base band, or may be a data signal wherein a part of a carrier wave propagates, and a computer readable program code is installed therein. This propagating data signal may use plural kinds of formats, including electromagnetic signals, optical signals or an arbitrary and proper combination thereof, but is not limited to them. The computer readable signal medium may be further any computer readable medium other than the computer readable recording medium, and the computer readable medium may be used in an instruction execution system, apparatus or device, or may send, propagate or transmit a program used by combination.

Program code included in the computer readable medium may be transmitted by any proper medium, wirelessly, an electric wire, an optical fiber cable, an optical cable, RF or the like, or an arbitrary and proper combination thereof, but not limited to them.

Computer program code for operation and execution according to the present invention may be prepared in a kind of or plural kinds of programming languages. The programming language includes an object-oriented programming language, such as Java, Smalltalk or C++, or a usual procedural programming language such as C or a similar programming language. The program code may be executed completely on a user computer, or executed partially on the user computer. The program code may be executed as an independent software package. The program code may be executed partially on the user computer and partially on a remote computer. The program code may be executed completely on the remote computer or completely on a server. In the case of executing on the remote computer, the remote computer may be connected to the user computer via an arbitrary kind of network including a local area network (LAN) or a wide area network (WAN), or may be connected to an external computer (for example, connected via the Internet using an internet service provider).

As described above, the present invention has been explained with reference to the process diagram and/or the block diagram of the method, apparatus (system) and the computer program product according to the present invention. A combination of the respective boxes in the flowchart and/or the block diagram and the respective boxes of the process diagram and/or the block diagram may be realized by computer program instructions. These computer program instructions are provided to a processor of a general purpose computer, a dedicated computer or other programmable data processing device, therefore when one kind of device is produced, these computer program instructions are executed by a computer or other programmable data processing device, a realization flowchart is generated, a device that realizes a predetermined function/operation in a box in a flowchart and/or a block diagram is generated. These computer program instructions may be stored in a computer readable medium that can make a computer or other programmable data processing device operate in a specific form. In this way, an instruction stored in the computer readable medium generates a manufacture of an instruction means including a predetermined function/operation in a box in a realization flowchart and/or a block diagram.

The computer program instructions are loaded on a computer, other programmable data processing device or other equipment, a series of operation steps are executed on the computer, the other programmable data processing device or the other equipment, and a process of computer realization is generated, therefore the instructions executed on the computer or other programmable device can provide a process for realizing the predetermined function/operation in a box in the realization flowchart and/or the block diagram.

The above described explanation is merely explanatory, and may be modified and/or replaced. For example, in the above description, it is explained that a camera is attached to a vehicle, but it is merely an example and it does not limit the present invention. The camera may be positioned at any position; as long as a disparity map corresponding to a gradation image can be obtained, the present invention can be applied so as to detect a road marking having linear shape in a road traffic environment. Moreover, in the above description, it is explained that a road marking having linear shape is white, but it is supposed for the purpose of illustration, and a color of the road marking having linear shape is not actually limited. After sectioning a road marking having linear shape by using the present invention, it can be further sectioned via a gray scale diagram or color of the marking having linear shape on a color image.

In the above description, it is described that the detection method can be applied for sectioning a road marking having linear shape. Actually, the detection method according to the present invention can be applied to other objects having linear shape which intersect the road vanishing point in a U-disparity map, such as a curb, or a wayside fence, for example.

The flowchart and the block diagram in the drawings show a realizable system architecture, functions and operations of the system, the method and the computer program product according to the plural embodiments of the present invention. In this regard, each box in the flowchart or the block diagram can represent a part of a module, a block or a code, and the part of the module, the block or the code includes one or plural executable instructions for realizing a predetermined logic function. Moreover, it should be noted that during the realization as some replacements, a function of marking in a box can be generated in a different order from the order of marking in the drawing. For example, two successive boxes can be executed parallel to each other actually and fundamentally; in some cases, it can be executed in reverse order, and this is set in the related function. Moreover, it should be noted that the combination of the respective blocks in the block diagram and/or the flowchart and a block in the block diagram and/or the flowchart can be realized by a system based on a dedicated hardware that executes the predetermined function or operation, or can be realized by a combination of the dedicated hardware and a computer instruction.

As described above, the respective embodiments of the present invention are explained. The explanation is illustrative, but is not complete, and is not limited to the respective embodiments as presented above. In the case of not deviating from the scope and the intent of the respective embodiments as explained above, for an ordinary person skilled in the art, a modification and change would be easily conceived. Selection of the terms used in the present application is intended to interpret the principles of the respective embodiments, practical applications or improvement to technology in the marketplace, or to allow other ordinary persons skilled in the art to understand the respective embodiments as presented above.

The present application is based on and claims the benefit of priority of Chinese Priority Application No. 201310349606.1 filed on August 12, 2013, the entire contents of which are hereby incorporated by reference.

## Claims

1. A linear road marking detection method, comprising the steps of:

   obtaining a u-disparity map including a road surface region;
   determining a road vanishing point on the u-disparity map;
   obtaining a first resolution probability distribution diagram of a line in a predetermined region in a vicinity of the road vanishing point, from a first resolution represented by a first predetermined polar point interval and a first predetermined polar angle interval; and
   determining different types of the linear road marking based on a relation between an actual distance between lines parallel to each other in a physical world and a corresponding polar angle in the first resolution probability distribution diagram of the lines parallel to each other.

2. The linear road marking detection method as claimed in claim 1, further comprising the steps of:

   obtaining a second resolution probability distribution diagram of the line in the predetermined region in the vicinity of the road vanishing point, from a second resolution represented by a second predetermined polar point interval and a second predetermined polar angle interval, the second resolution being higher than the first resolution;
   determining a number of corresponding lines appearing on the second resolution probability distribution diagram for the linear road marking which is determined to be a roadway line; and determining a type of the roadway line based on the number of the appearing corresponding lines.

3. The linear road marking detection method as claimed in claim 1, wherein the step of determining the road vanishing point on the u-disparity map includes the steps of:

acquiring a probability distribution of a line of each candidate road vanishing point by, in the u-disparity map, for each candidate road vanishing point, calculating a probability that each line passing through the candidate road vanishing point exists, obtaining a probability distribution diagram of the lines passing through each candidate road vanishing point, and restricting for each line a corresponding candidate road vanishing point as a polar point and a corresponding polar angle;

acquiring a distribution of a degree of overlap of a candidate road vanishing point by obtaining a degree of overlap which represents an extent of an overlap of distribution of a probability that a line of each candidate road vanishing point exists, based on the probability that each line passing through the candidate road vanishing point exists; and

determining the road vanishing point based on the distribution of the degree of overlap of the candidate road vanishing point.

4. The linear road marking detection method as claimed in claim 1, wherein the step of determining the different types of the linear road marking based on the relation between the actual distance between the lines parallel to each other in the physical world and the corresponding polar angles of the lines parallel to each other in the first resolution probability distribution diagram includes the steps of:

determining a polar angle of each line, a polar point of which is positioned at the road vanishing point on the first resolution probability distribution diagram, and a probability of which is greater than a predetermined threshold;

calculating the actual distance in the physical world between adjacent lines in each of the lines on the first resolution probability distribution diagram, based on a relation between a polar angle of each line and the actual distance between the lines parallel to each other in the physical world and the corresponding polar angle in the first resolution probability distribution diagram of the lines parallel to each other; and

determining the different types of the linear road marking based on the actual distance between the adjacent lines in the physical world in each of the line, at least a part of which is calculated.

5. The linear road marking detection method as claimed in claim 2, further comprising the step of:

distinguishing further a different type of a roadway line by a feature on a gradation image of the roadway line for the roadway line which appears as a number of lines having the same shape on the second resolution probability distribution diagram.

6. The linear road marking detection method as claimed in any one of claims 1 to 5, further comprising the step of:

outputting a prompt message or automatically controlling a travel motion of a vehicle based on the detected linear road marking.

7. A linear road marking detection apparatus, comprising:

a u-disparity map acquisition unit that acquires a u-disparity map including a road surface region;

a road vanishing point determination unit that determines a road vanishing point on the u-disparity map;

a first resolution probability distribution diagram acquisition unit that acquires a first resolution probability distribution diagram of a line in a predetermined region in a vicinity of the road vanishing point, from a first resolution represented by a first predetermined polar point interval and a first predetermined polar angle interval; and

a different type linear road marking section unit that determines different types of the linear road marking based on a relation between an actual distance between lines parallel to each other in a physical world and a corresponding polar angle in the first resolution probability distribution diagram of the lines parallel to each other.

8. The linear road marking detection apparatus as claimed in claim 7, further comprising:

a second resolution probability distribution diagram acquisition unit that acquires a second resolution probability distribution diagram of the line in the predetermined region in the vicinity of the road vanishing point, from a second resolution represented by a second predetermined polar point interval and a second predetermined polar angle interval, the second resolution being higher than the first resolution;
a roadway line corresponding line number determination unit that determines a number of corresponding lines appearing on the second resolution probability distribution diagram for the linear road marking which is determined to be a roadway line; and
a roadway line type determination unit that determines a type of the roadway line based on the number of the appearing corresponding lines.

9. The linear road marking detection apparatus as claimed in claim 7, wherein the road vanishing point determination unit determines the road vanishing point on the u-disparity map by acquiring a probability distribution of a line of each candidate road vanishing point by, in the u-disparity map, for each candidate road vanishing point, calculating a probability that each line passing through the candidate road vanishing point exists, obtaining a probability distribution diagram of the lines passing through each candidate road vanishing point, and restricting for each line a corresponding candidate road vanishing point as a polar point and a corresponding polar angle; acquiring a distribution of a degree of overlap of a candidate road vanishing point by obtaining a degree of overlap which represents an extent of an overlap of distribution of a probability that a line of each candidate road vanishing point exists, based on the probability that each line passing through the candidate road vanishing point exists; and determining the road vanishing point based on the distribution of the degree of overlap of the candidate road vanishing point.

10. The linear road marking detection apparatus as claimed in claim 7, wherein the different type linear road marking section unit determines the different types of the linear road marking based on the relation between the actual distance between the lines parallel to each other in the physical world and the corresponding polar angles in the first resolution probability distribution diagram of the lines parallel to each other by determining a polar angle of each line, a polar point of which is positioned at the road vanishing point on the first resolution probability distribution diagram, and a probability of which is greater than a predetermined threshold; calculating the actual distance in the physical world between adjacent lines in each of the lines on the first resolution probability distribution diagram, based on a relation between a polar angle of each line and the actual distance between the lines parallel to each other in the physical world and the corresponding polar angle in the first resolution probability distribution diagram of the lines parallel to each other; and determining the different types of the linear road marking based on the actual distance between the adjacent lines in the physical world in each of the line, at least a part of which is calculated.

# FIG.1

BINOCULAR CAMERA ~101

100

102~ IMAGE PROCESSING MODULE → VEHICLE CONTROL MODULE ~103

EP 2 838 051 A2

# FIG.2

# FIG.3

300

```
┌──────────┐      ┌──────────────────────────┐ 310
│  IMAGE   │─────▶│      u-DISPARITY MAP      │
│  DATA    │      │    ACQUISITION MEMBER     │
└──────────┘      └──────────────────────────┘
                              │
                              ▼
                  ┌──────────────────────────┐ 320
                  │   ROAD VANISHING POINT    │
                  │   DETERMINATION MEMBER    │
                  └──────────────────────────┘
                              │
                              ▼
                  ┌──────────────────────────┐ 330
                  │     FIRST RESOLUTION      │
                  │  PROBABILITY DISTRIBUTION │
                  │ DIAGRAM ACQUISITION MEMBER│
                  └──────────────────────────┘
                              │
                              ▼
                  ┌──────────────────────────┐ 340   ┌──────────────┐
                  │   DIFFERENT TYPE ROAD     │       │ ROAD MARKING │
                  │  MARKING HAVING LINEAR    │──────▶│ HAVING LINEAR│
                  │   SHAPE DIVISION MEMBER   │       │    SHAPE     │
                  └──────────────────────────┘       └──────────────┘
```

# FIG.4

400

( START )

────────────────────────────────────────────────────────────── S410
ACQUIRE u-DISPARITY MAP INCLUDING ROAD SURFACE REGION

────────────────────────────────────────────────────────────── S420
DETERMINE ROAD VANISHING POINT IN u-DISPARITY MAP

────────────────────────────────────────────────────────────── S430
ACQUIRE FIRST RESOLUTION PROBABILITY DISTRIBUTION DIAGRAM
OF LINES IN PREDETERMINED REGION IN VICINITY
OF ROAD VANISHING POINT FROM FIRST RESOLUTION EXPRESSED
BY FIRST PREDETERMINED POLAR POINT INTERVAL
AND FIRST PREDETERMINED POLAR ANGLE INTERVAL

────────────────────────────────────────────────────────────── S440
DETERMINE DIFFERENT TYPE ROAD MARKING HAVING LINEAR
SHAPE BASED ON RELATION BETWEEN ACTUAL DISTANCE
BETWEEN LINES PARALLEL TO EACH OTHER IN PHYSICAL WORLD
AND CORRESPONDING POLAR ANGLE OF LINES PARALLEL TO EACH
OTHER IN FIRST RESOLUTION PROBABILITY DISTRIBUTION DIAGRAM

( END )

## FIG.5

# FIG.6A

Angle

CVP

b

x

θ

ρ

d

EP 2 838 051 A2

# FIG.6B

En(b)

CVP

# FIG.6C

En(b)

x0    CVP

# FIG.6D

Angle

x0    CVP

# FIG.7

Angle

$\Delta \theta$

$\Delta d$    CVP

# FIG.8A

Angle

CVP

Angle

CVP

# FIG.8B

# FIG.9

Rwidth

β1

β2

x0

EP 2 838 051 A2

FIG.10A

FIG.10B

FIG.11

FIG.12A

x0

FIG.12B

x0

FIG.12C

x0

FIG.12D

# FIG.13

500

START

──S510

ACQUIRE u-DISPARITY MAP INCLUDING ROAD SURFACE REGION

──S520

DETERMINE ROAD VANISHING POINT IN u-DISPARITY MAP

──S530

ACQUIRE FIRST RESOLUTION PROBABILITY DISTRIBUTION DIAGRAM
OF LINES IN PREDETERMINED REGION IN VICINITY
OF ROAD VANISHING POINT FROM FIRST RESOLUTION EXPRESSED
BY FIRST PREDETERMINED POLAR POINT INTERVAL
AND FIRST PREDETERMINED POLAR ANGLE INTERVAL

──S540

DETERMINE DIFFERENT TYPE ROAD MARKING HAVING LINEAR
SHAPE BASED ON RELATION BETWEEN ACTUAL DISTANCE
BETWEEN LINES PARALLEL TO EACH OTHER IN PHYSICAL WORLD
AND CORRESPONDING POLAR ANGLE OF LINES PARALLEL TO EACH
OTHER IN FIRST RESOLUTION PROBABILITY DISTRIBUTION DIAGRAM

──S550

ACQUIRE SECOND RESOLUTION PROBABILITY DISTRIBUTION DIAGRAM
OF LINES IN PREDETERMINED REGION IN VICINITY
OF ROAD VANISHING POINT FROM SECOND RESOLUTION EXPRESSED
BY SECOND PREDETERMINED POLAR POINT INTERVAL
AND SECOND PREDETERMINED POLAR ANGLE INTERVAL,
WHEREIN SECOND RESOLUTION IS HIGHER THAN FIRST RESOLUTION

──S560

DETERMINE NUMBER OF CORRESPONDING LINES APPEARING
IN SECOND RESOLUTION PROBABILITY DISTRIBUTION DIAGRAM,
FOR MARKING HAVING LINEAR SHAPE DETERMINED
TO BE ROADWAY LINE

──S570

FURTHER DETERMINE TYPE OF ROADWAY LINE,
BASED ON NUMBER OF APPEARING CORRESPONDING LINES

END

FIG.14A

FIG.14B

FIG.15A

FIG.15B

600

FIG.16

| | |
|---|---|
| CPU 601 | |
| RAM 602 | SYSTEM BUS 604 |
| ROM 603 | |

| | |
|---|---|
| HARD DISK CONTROLLER 605 | HARD DISK 610 |
| KEYBOARD CONTROLLER 606 | KEYBOARD 611 |
| SERIAL INTERFACE CONTROLLER 607 | EXTERNAL SERIAL DEVICE 612 |
| PARALLEL INTERFACE CONTROLLER 608 | EXTERNAL PARALLEL DEVICE 613 |
| DISPLAY CONTROLLER 609 | DISPLAY DEVICE 614 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 201110409269 A
- WO 201210194074 A
- CN 201210262021
- CN 201110409269
- CN 201310349606